# EUROPEAN PATENT SPECIFICATION

(11) **EP 4 112 366 B1**
(45) Date of publication and mention of the grant of the patent: **28.01.2026**
(21) Application number: 21182768.8
(22) Date of filing: 30.06.2021
(51) Int. Cl.: B60L 53/16, B60L 53/302, H01B 7/42, H02G 3/03, F28D 15/02, B60L 53/10, B60L 53/18, H01R 13/00

(54) **CHARGING CONNECTOR FOR AN ELECTRIC VEHICLE**
LADESTECKER FÜR EIN ELEKTROFAHRZEUG
CONNECTEUR DE CHARGEMENT POUR VÉHICULE ÉLECTRIQUE

(43) Date of publication of application: 04.01.2023
(73) Proprietor: ABB E-mobility B.V., 2629 JG Delft (NL)
(72) Inventor: GARCIA-FERRE, Francisco, 5400 Baden (CH); KAUFMANN, Lilian, 5413 Birmenstorf (CH); KHEIRI, Pedram, 5212 Hausen (CH); RAAIJMAKERS, Stefan, 2613 WN Delft (NL); ZOON, Wiebe, 2623 NM Delft (NL)
(74) Representative: Zimmermann & Partner Patentanwälte mbB

(56) References cited:
- WO-A1-2017/143295
- DE-A1- 102016 105 311
- DE-A1- 102016 105 347
- DE-A1- 102019 214 024
- US-A1- 2019 291 588
- US-B1- 10 449 871

## Description

### FIELD OF THE INVENTION

The present invention relates to an electric vehicle charging connector for an electric vehicle and a charging station.

### BACKGROUND OF THE INVENTION

One limiting factor in charging cables for electric vehicles is the heat that is generated when high currents flow through the cable and the electrical connector from the charging station to the battery of a vehicle. The heat may be actively conducted away from the heat sources using liquids. In this way current rates over 500 A are achieved. For this kind of cooling arrangements are required that comprise and conduct the liquid from heat sources to the heat sinks and back. Additional devices such as pumps are necessary. Alternatively, passive cooling is possible. However, with existing designs only current ratings up to 200 A are achievable. Passive cooling needs a design as hollows in the enclosure or material of the enclosure for not insulating the heat in the enclosure. Such designs may not be effective or lead to a high weight of the charging cable.

Prior art US 2019/0315239 A1 discloses an electrical contact element for a car charging plug connector. The electrical contact element has a contact part and a connection part, wherein the connection part can be connected to an electrical conductor of a cable. Cooling liquid can be delivered to the contact element. As a result, the heat produced on the contact element is extracted directly.

US 10,109,395 B2 relates to a connection unit for a fluid-cooled cable and to a system composed of a plug-in connector, a fluid-cooled cable and a connection unit. The connection unit comprising a housing, which has a cable connecting opening, a fluid inlet opening and a fluid outlet opening.

US 2019/0074628 A1 relates to a plug-in connector part for plug-in connection to a mating plug-in connector part.

Prior art DE 10 2011 100 389 A1 discloses a charging cable for transferring electrical energy to an energy storage device of an electric or hybrid vehicle. The charging cable comprises a coolant-guiding device, which is arranged inside a cable jacket.

DE 10 2016 105 347 A1 describes a connector part for connection to a mating connector part comprises a contact element for making electrical contact with an associated mating contact element of the mating connector part. The contact element has a contact portion for contacting with the mating contact element of the mating connector part and a shaft portion for connecting a load line for transmitting an electric current. In the contact element a channel is extended, with which at least one coolant line is fluid-connectable, for guiding a coolant through the contact element. In this way, a connector part is provided with a contact element.

US 2019/291588 A1 relates to a liquid-cooled charging connector. A charging connector may be coupled to a charging cable. The charging connector includes a first electrical socket and a second electrical socket. The charging connector further includes a first sleeve that is concentrically coupled to the first electrical socket and a second sleeve that is concentrically coupled to the second electrical socket. The charging connector further includes a manifold assembly enclosing the first and second electrical sockets and the first and second sleeves, such that the first and second sleeves and the manifold assembly create a hollow interior space there between. The charging connector further includes an inlet conduit and an outlet conduit within the manifold assembly such that the inlet conduit, the hollow interior space, and the outlet conduit together create a fluid flow path.

### SUMMARY OF THE INVENTION

An objective of the invention may be to provide an improved charging connector having electric contacts, with which high current rates are possible.

The problem is solved by an electric vehicle charging connector, having the features of claim 1. Advantageous embodiments of the invention are specified in the dependent claims.

According to the invention, an electric vehicle charging connector is proposed, comprising contact elements and a cable for conduction charge current. The contact elements are electrically connected to the cable. The contact elements comprise a block portion and at least one contact finger extending from the block portion, for providing the electric contact with a mating contact of a vehicle. The electric charging connector further comprises a cooling tube for forced cooling, comprising a liquid coolant for cooling at least the contact element.

The cooling tube being fluidically connected to an internal cooling channel of the contact element, wherein the cooling channel is extending from the block portion into the contact finger, so that the block portion and the contact fingers are cooled by the cooling fluid.

The charging connector provides the charging current from a charging station to the battery of an electric vehicle. Thus, "charging connector" is understood to be a handheld device such as a charging gun or charging nozzle. The counterpart of the charging connector on vehicle-side is called socket. The contacts elements are preferably provided in an inner casing surrounded by an outer casing. Between the outer casing and the inner casing, there may be free space or air such that the weight of the connector is reduced, thereby providing a convenient handling and shape of the connector. The contact elements are elements, which are electrically conductive and which are electrically connected to socket contacts charging the electric vehicle.

A block portion according to the invention is a part, which has a significant higher volume compared to the contact finger. The block portion thereby is designed to be electrically connected with the cable. Further, the block portion is designed to be additionally connected with the cooling tube and to provide the contact fingers. Preferably, the block portion has a cuboid shape. For providing an electrical connection between charging station and the vehicle, the contact finger comes into contact with a mating contact of the vehicle socket. The contact finger thereby is introduced into a female socket. In order to avoid a human finger entering the socket, a thickness of the contact finger is smaller than a human finger. For increasing the contact area, preferably at least two contact fingers are provided.

A cooling tube according to the invention is a pipe in which a cooling fluid is transported. By providing the block portion with cooling channels, the block portion can be efficiently cooled. Due to the small thickness of these fingers, resulting in a higher heat loss density, this part is hotter than the block portion. As these pipes further extends into the fingers, also the fingers can be efficiently cooled. Preferably, the pipes extends to a front end of the fingers. Thus, the contact fingers are not merely cooled via heat conduction, which is less efficient than cooling the fingers via the cooling fluid in the cooling channels. Accordingly, it is possible operating the contact element with higher voltage and current, without exceeding an allowable temperature range of the contact element. Thereby, it is possible to reduce the charging time for a heavy load vehicle.

In a preferred embodiment of the invention, an exit of the cooling channel of the block portion is connected to a cable jacket of the cables, so that the cooling fluid cools the cable at the return flow. The cooling fluid thereby flows between the cable jacket and the cable. Thereby it is also possible to cool the cables, so that the diameter of the cables can be reduced compared to non-cooled cables. Further, an additional cooling tube for the return flow can be omitted. From this it follows, that also the space required for the cables can be reduced, compared to non-cooled cables and an additional cooling tube.

In a further preferred embodiment of the invention, the cooling channel in the block portion provides a communication channel, with which the cooling fluid partly bypasses the cooling channel of the contact finger. A communication channel thereby is a channel, which directly connects an entry region with an exit region in the block portion. By doing so, the cooling medium does not flow through the cooling channel of the contact fingers. With such a communication channel, it is possible to optimize the pressure drop in the contact element. As not all the cooling fluid enters the contact finger, the cooling fluid entering the cable jacket has a lower temperature. Accordingly, the cooling effect on the cables can be increased.

Advantageously, the communication channel has a smaller cross section than the cooling channel of the block portion and/or the contact finger. By adapting the cross section of the communication channel, it is possible to regulate the cooling fluid flowing into the contact finger during the design phase of the contact element. Thereby, it is possible to provide an optimal cooling for the contact finger and the cables, so that the efficiency of the cooling system is improved.

In a further advantageous development, the contact element is a 3D-printing part. A 3D-printing part thereby is a part, which is manufactured via a 3D-printing process. In a 3D-printing process, the part is manufactured by printing each layer on top of the previous layer. Thereby, complex parts can be manufactured, which are difficult to machine with common methods. In particular, this method facilitates to provide cooling channels in the contact fingers. It is also possible to provide cooling channel designs, which cannot be manufactured with common methods.

Preferably, the cooling channel having a circular-, a drop-like-, a diamond- or ellipse-shaped cross-section. The drop-like-shape and the diamond-shape have the advantage that in contrast to the circular-shape it is possible to print the cooling channel during the 3D-printing process without using a support structure for the cooling channel. The 3D-printing process therefore can be simplified and time for manufacturing the contact element can be reduced. Further, the material for the support structure can be saved, so that these cross sections can be economically manufactured. In contrast thereto, it is easier to manufacture a circular design during common manufacturing processes. An ellipse-shaped cross-section has the advantage, if the small ellipse axis is arranged with the thickness of the contact finger, a high cross section area for the cooling channel could be provided. Accordingly, pressure drop in the contact finger can be decreased, so that the efficiency of the cooling system can be improved.

Alternatively, the contact element comprises at least two pieces, which are joint together by brazing or welding. By providing two pieces, the cooling channels can be manufactures via an e.g. CNC manufacturing method. This also enables producing the cooling channels in the contact fingers. After, both parts are manufactured they are joint via brazing or welding.

In an advantageous example, the cooling channel in the finger has a meander or spiral design. With such a design, a large area of the contact finger can be cooled via the cooling fluid. Accordingly, a high cooling effect can be achieved.

Preferably, the contact finger has a thickness smaller than a human finger. A flat design thereby is characterized in that a thickness of the contact finger is much smaller than the width and length. By providing a flat design a high surface area can be provided, so that the heat dissipation is improved further it can be ensured that a human finger cannot enter a socket for the contact finger. Accordingly, a high power transmission with a high human safety can be provided.

According to a further aspect, a charging station is provided, comprising an electric vehicle charging connector as described above. The described electric vehicle charging connector may therefore be a part of a charging station. With such a charging station, the aforementioned advantages are achieved.

These and other features, aspects and advantages of the present invention will become better understood with reference to the accompanying figure and the following description. Identical or equivalent elements are in principle provided with the same reference signs.

### BRIEF DESCRIPTION OF THE DRAWINGS

The subject matter of the Invention will be explained in more details in the following description illustrated in the drawings, showing in:
- Figure 1: An electric vehicle charging connector according to an embodiment of the invention,
- Figure 2: A contact element with a cooling channel according to an embodiment of the invention,
- Figure 3a: Cooling channel design of the contact finger according to an example,
- Figure 3b: Cooling channel design of the contact finger according to a further example, and
- Figure 4: Embodiments of a cooling channel cross section.

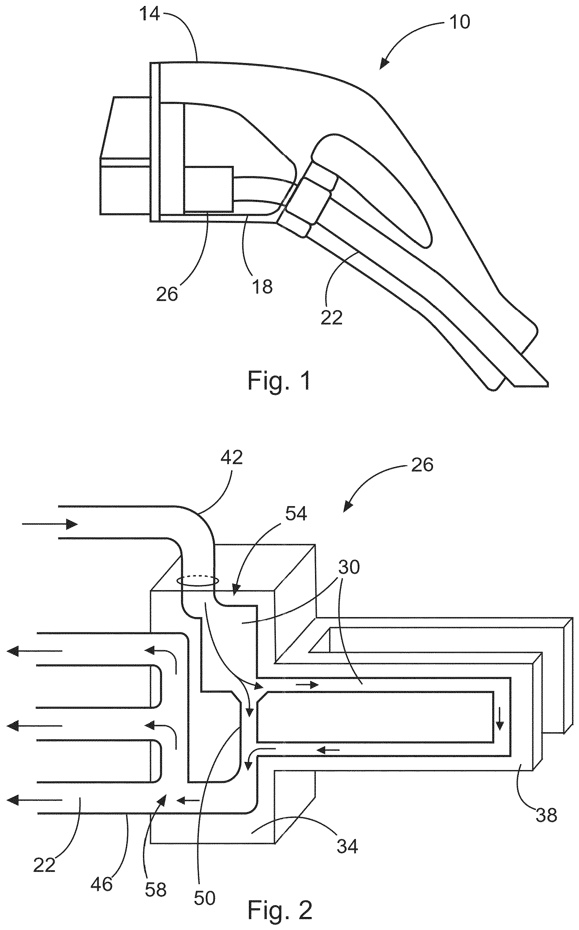

Fig. 1 shows an electric vehicle charging connector 10, according to an embodiment of the invention. Such an electric vehicle charging connector 10 may comprise essentially an outer casing or enclosure 14, respectively, an inner casing or enclosure 18, respectively, a cable 22 for conducting charge current from a charge station (not shown) to a battery charge socket. The cable 22 is linked to a contact element 26 inside the inner enclosure 18. At an opposite end to the cable 22, the contact element 26 comes in contact with a respective socket of a vehicle. The function of the inner enclosure 18 is to ensure electrical insulation, to provide mechanical strength, and to prevent the electric vehicle charging connector 10 from contamination by intruding water and dirt. For this reason, the inner enclosure 18 is massively sealed, and in some designs exhibits also a nearly completely potted structure. This structure is further enclosed in the outer enclosure 14. The purpose of the structure is to provide a handle for a user and other functions that interact with the user. One of the reasons for separating enclosure 14 and 18 is weight reduction.

Figure 2 shows the contact element 26 with a cooling channel 30 according to an embodiment of the invention. The contact element 26, which is made of an e.g. copper material, comprises a block portion 34 and flat contact fingers 38, extending from the block portion 34. For providing the cooling channel 30 in the contact element 26, either this part can be manufactured via 3D printing or by welding respectively brazing two halves of contact element parts 26 together. In this embodiment, the contact element 26 provides two contact fingers 38, which are parallel and spaced apart to each other. The contact fingers 38 provide the electric contact with a mating contact of a vehicle socket (not shown). The electric vehicle charging connector 10 further comprises a cooling tube 42, fluidically connected to the block portion 34 of the contact element 26. The cooling fluid of the cooling tube 42 thereby can enter into the cooling channel 30 of the block portion 34. The cooling channels 30 of the block portion are connected with cooling channels 30 of the contact fingers 38, which extends to the tip of the fingers 38. In this example, the cooling channel 30 of the contact finger 38 has a U-shape.

With the cooling fluid, the block portion 34 and the contact finger 38 can be cooled. At an exit of the cooling channels 30, they are split up into three branches entering in a cable jacket 46 of the cables 22. Thereby, the cables 22 are additionally cooled. In this embodiment, a communication channel 50 is provided in the block portion 34, connecting the cooling channel 30 in the entry region 54 with the cooling channel 50 at an exit region 58. Thereby, the cooling channel 30 of the contact finger 38 can be partly bypassed. In an embodiment not shown, the contact element 26 also could be provided without the communication channel 54. Thereby, the whole cooling fluid is forced to circulate through the contact finger 38. In order to circulate and cool the cooling fluid, the charge station (not shown) provides a fluid pump and a device for cooling the cooling fluid.

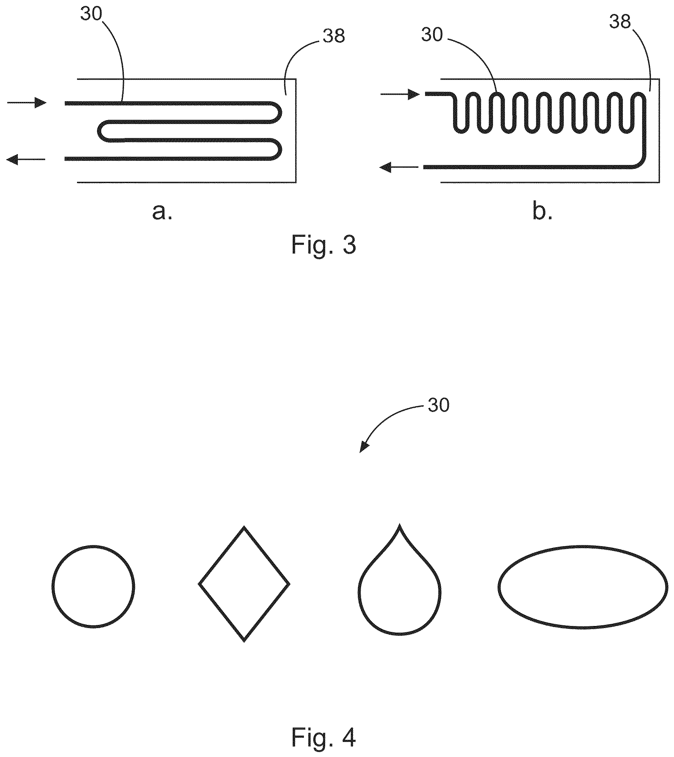

Figure 3a shows a cooling channel design of the contact finger 38 according to an embodiment of the invention. In this embodiment, the cooling channel 30 in the contact finger 38 form several loops in a longitudinal direction of the contact finger 38. Thereby a large area of the contact finger 38 can be cooled, so that the heat of the contact finger 38 efficiently can be removed. A further embodiment of a cooling channel design of the contact finger 38 is show in Figure 3b. In this embodiment the cooling channel 30 in the finger 38 form several loop in a transverse direction of the contact finger 38. Also with this design, a high cooling effect can be achieved.

Figure 4 shows embodiments of a cooling channel 30 cross section. A first embodiment shows a circular design of the cooling channel 30. In a second embodiment, the cross section has a diamond-shaped cross section. This design has the advantage that if the contact element 26 is manufactured by a 3D printing process, no printing support structure in the cooling channel 30 is required. The same would be true for the ellipse design, if the cooling channel 30 is printed along the longitudinal axis of the ellipse. The ellipse design further has the advantage that due to a smaller height in one axis of the ellipse, this cooling channel can also be provided in flat parts like the contact fingers 38.

### List of reference numbers

- 10: electric vehicle charging connector
- 14: outer enclosure
- 18: inner enclosure
- 22: cable
- 26: contact element
- 30: cooling channel
- 34: block portion
- 38: contact finger
- 42: cooling tube
- 46: cable jacket
- 50: communication channel
- 54: entry region
- 58: exit region

## Claims

1. Electric vehicle charging connector (10) comprising contact elements (26) and a cable (22) for conducting charge current, wherein the contact elements (26) are electrically connected to the cable (22), wherein the contact elements (26) comprise a block portion (34) and at least one contact finger (38) extending from the block portion (34), for providing the electric contact with a mating contact of a vehicle, wherein the electric charging connector (10) further comprises a cooling tube (42) for forced cooling, comprising a liquid coolant for cooling the contact elements (26),
**characterized in that,**
the cooling tube (42) being fluidically connected to an internal cooling channel (30) of the contact elements (26), wherein the cooling channel (30) extends from the block portion (34) into the contact finger (38), so that the block portion (34) and the contact finger (38) are cooled by the cooling fluid.

2. Electric vehicle charging connector (10) according to claim 1, **characterized in that** an exit of the cooling channel (30) of the block portion (34) is connected to a cable jacket (46) of the cable (22), so that the cooling fluid cools the cable (22) at the return flow.

3. Electric vehicle charging connector (10) according to claim 1 or 2, **characterized in that** the cooling channel (30) in the block portion (34) provides a communication channel (50), with which the cooling fluid partly bypasses the cooling channel (30) of the contact finger (38).

4. Electric vehicle charging connector (10) according to claim 3, **characterized in that** the communication channel (50) has a smaller cross section than the cooling channel (30) of the block portion (34) and/or the contact finger (38).

5. Electric vehicle charging connector (10) according to one of the preceding claims, **characterized in that** the cooling channel (30) having a circular-, a drop-like-, a diamond-, a square- or ellipse-shaped cross-section.

6. Electric vehicle charging connector (10) according to one of the preceding claims, **characterized in that** the contact element (26) is a single 3D-printing part.

7. Electric vehicle charging connector (10) according to claims 1 to 5, **characterized in that** the contact element (26) comprises at least two pieces, which are joint together by brazing or welding.

8. Electric vehicle charging connector (10) according to one of the preceding claims, **characterized in that** the cooling channel (30) in the finger (38) has a meander or spiral design.

9. Electric vehicle charging connector (10) according to one of the preceding claims, **characterized in that** the contact finger (38) has a flat design.

10. A charging station comprising an electric vehicle charging connector (10) according to any of claims 1 to 9.

## Patentansprüche

1. Ladestecker (10) für ein Elektrofahrzeug, der Kontaktelemente (26) und ein Kabel (22) zum Leiten von Ladestrom umfasst, wobei die Kontaktelemente (26) elektrisch mit dem Kabel (22) verbunden sind, wobei die Kontaktelemente (26) einen Blockabschnitt (34) und mindestens einen Kontaktfinger (38) umfassen, der sich von dem Blockabschnitt (34) erstreckt, um den elektrischen Kontakt mit einem Gegenkontakt eines Fahrzeugs bereitzustellen, wobei der elektrische Ladestecker (10) ferner ein Kühlrohr (42) zur Zwangskühlung umfasst, das ein flüssiges Kühlmittel zum Kühlen der Kontaktelemente (26) umfasst,
**dadurch gekennzeichnet, dass**
das Kühlrohr (42) fluidisch mit einem inneren Kühlkanal (30) der Kontaktelemente (26) verbunden ist, wobei sich der Kühlkanal (30) von dem Blockabschnitt (34) in den Kontaktfinger (38) erstreckt, so dass der Blockabschnitt (34) und der Kontaktfinger (38) durch das Kühlfluid gekühlt werden.

2. Ladestecker (10) für ein Elektrofahrzeug nach Anspruch 1, **dadurch gekennzeichnet, dass** ein Ausgang des Kühlkanals (30) des Blockabschnitts (34) mit einem Kabelmantel (46) des Kabels (22) verbunden ist, so dass das Kühlfluid das Kabel (22) im Rückfluss kühlt.

3. Ladestecker (10) für ein Elektrofahrzeug nach Anspruch 1 oder 2, **dadurch gekennzeichnet, dass** der Kühlkanal (30) in dem Blockabschnitt (34) einen Kommunikationskanal (50) bereitstellt, mit dem das Kühlfluid den Kühlkanal (30) des Kontaktfingers (38) teilweise umgeht.

4. Ladestecker (10) für ein Elektrofahrzeug nach Anspruch 3, **dadurch gekennzeichnet, dass** der Kommunikationskanal (50) einen kleineren Querschnitt als der Kühlkanal (30) des Blockabschnitts (34) und/oder des Kontaktfingers (38) aufweist.

5. Ladestecker (10) für ein Elektrofahrzeug nach einem der vorhergehenden Ansprüche, **dadurch gekennzeichnet, dass** der Kühlkanal (30) einen Kreis-, Tropfen-, Diamant-, Quadrat- oder Ellipsen-förmigen Querschnitt aufweist.

6. Ladestecker (10) für ein Elektrofahrzeug nach einem der vorhergehenden Ansprüche, **dadurch gekennzeichnet, dass** das Kontaktelement (26) ein einziges 3D-Druckteil ist.

7. Ladestecker (10) für ein Elektrofahrzeug nach einem der Ansprüche 1 bis 5, **dadurch gekennzeichnet, dass** das Kontaktelement (26) mindestens zwei Teile umfasst, die durch Löten oder Schweißen miteinander verbunden sind.

8. Ladestecker (10) für ein Elektrofahrzeug nach einem der vorhergehenden Ansprüche, **dadurch gekennzeichnet, dass** der Kühlkanal (30) im Finger (38) mäanderförmig oder spiralförmig ausgebildet ist.

9. Ladestecker (10) für ein Elektrofahrzeug nach einem der vorhergehenden Ansprüche, **dadurch gekennzeichnet, dass** der Kontaktfinger (38) flach ausgebildet ist.

10. Ladestation, die einen Ladestecker (10) für ein Elektrofahrzeug nach einem der Ansprüche 1 bis 9 umfasst.

## Revendications

1. Connecteur de charge de véhicule électrique (10) comprenant des éléments de contact (26) et un câble (22) pour conduire le courant de charge, ces éléments de contact (26) étant connectés électriquement au câble (22), ces éléments de contact (26) comprenant une partie bloc (34) et au moins un doigt de contact (38) s'étendant depuis la partie bloc (34), pour fournir le contact électrique avec un contact complémentaire d'un véhicule, ce connecteur de charge de véhicule électrique (10) comprenant en outre un tube de refroidissement (42) pour fournir un refroidissement forcé, comprenant un fluide de refroidissement pour refroidir les éléments de contact (26),
**caractérisé en ce que** :
le tube de refroidissement (42) est relié de manière fluidique à une voie de refroidissement interne (30) des éléments de contact (26), cette voie de refroidissement (30) s'étendant depuis la partie bloc (34) à l'intérieur du doigt de contact (38), de façon que la partie bloc (34) et le doigt de contact (38) soient refroidis par le fluide de refroidissement.

2. Connecteur de charge de véhicule électrique (10) selon la revendication 1, **caractérisé en ce qu'**une sortie de la voie de refroidissement (30) de la partie bloc (34) est reliée à une gaine de câble (46) du câble (22), de façon que le fluide de refroidissement refroidisse le câble (22) lors du flux de retour.

3. Connecteur de charge de véhicule électrique (10) selon la revendication 1 ou 2, **caractérisé en ce que** la voie de refroidissement (30) de la partie bloc (34) fournit une voie de communication (50), avec laquelle le fluide de refroidissement contourne partiellement la voie de refroidissement (30) du doigt de contact (38).

4. Connecteur de charge de véhicule électrique (10) selon la revendication 3, **caractérisé en ce que** la voie de communication (50) a une section transversale plus petite que la voie de refroidissement (30) de la partie bloc (34) et/ou du doigt de contact (38).

5. Connecteur de charge de véhicule électrique (10) selon l'une quelconque des revendications précédentes, **caractérisé en ce que** la voie de refroidissement (30) a une section transversale de forme circulaire, en forme de goutte, en forme de diamant, de forme carrée ou de forme elliptique.

6. Connecteur de charge de véhicule électrique (10) selon l'une quelconque des revendications précédentes, **caractérisé en ce que** l'élément de contact (26) est une seule pièce imprimée en 3D.

7. Connecteur de charge de véhicule électrique (10) selon les revendications 1 à 5, **caractérisé en ce que** l'élément de contact (26) comporte au moins deux morceaux, qui sont joints ensemble par brasage ou par soudage.

8. Connecteur de charge de véhicule électrique (10) selon l'une quelconque des revendications précédentes, **caractérisé en ce que** la voie de refroidissement (30) dans le doigt (38) a une forme en méandre ou en spirale.

9. Connecteur de charge de véhicule électrique (10) selon l'une quelconque des revendications précédentes, **caractérisé en ce que** le doigt de contact (38) a une forme plate.

10. Station de charge comportant un connecteur de charge de véhicule électrique (10) selon l'une quelconque des revendications 1 à 9.
